# EUROPEAN PATENT APPLICATION

(11) **EP 4 740 747 A1**
(43) Date of publication of application: **13.05.2026**
(21) Application number: 24464010.8
(22) Date of filing: 14.11.2024
(51) Int. Cl.: A23L 7/17, A23L 19/00, A23P 30/34, B29C 48/92

(54) **PROCESS FOR OBTAINING AN EXTRUDED, DIRECT-EXPANDED NON-GLUTEN PRODUCT COMPRISING GRAPE SKINS AND EXTRUDED PRODUCT SO OBTAINED**

(30) Priority: 07.11.2024 RO 202400678
(71) Applicant: Stefan cel Mare University of Suceava, 720229 Suceava, County Suceava (RO)
(72) Inventor: Mironeasa, Silvia, 720242, jud. Suceava (RO); Ungureanu-Iuga, Madalina, 727203, jud. Suceava (RO); Mironeasa, Costel, 720242, jud. Suceava (RO)

(57) **Abstract**

The invention refers to a process for obtaining an extruded, direct-expanded non-gluten product and a product thus obtained with a high fiber content and low caloric value. The process, according to the invention, consists in the processing by extrusion of a mix consisting of corn flour and grape skins separated from the pomace of grapes from the Feteasc 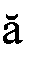 Regal 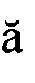 variety, respectively from the pomace of grapes from the Merlot variety and water, up to a moisture content of 15% ... 17%, at a temperature and pressure at which it will expand upon reaching atmospheric pressure, after extrusion, obtaining various shapes. The expanded material is cut to the desired length, dried at room temperature (22...24 °C), for 14...16 h, to reduce the moisture content and then it is packed.

## Description

The invention refers to a process for obtaining an extruded, direct-expanded non-gluten product and product thus obtained, the composition of which includes only natural ingredients.

There are many products from this category which are based on floury raw materials, vegetable ingredients, flavoring substances, natural and synthetic dyes, etc. The disadvantages of these products consist in the fact that they present reduced functional properties caused by the low fiber content of the manufacturing recipe and the high caloric content.

A rich source of fiber, easy to obtain, at a low cost, is represented by the grape pomace resulting from the winemaking process, i.e. the grape skins. These byproducts of winemaking are excellent sources of fiber and bioactive compounds (Deng et al., 2011; Kammerer et al., 2004), and extrusion processing is one of the promising ways to utilize pomace and produce healthy, fiber-rich, direct-expanded snack foods (Raleng et al., 2022; Wang et al., 2019) with low caloric value.

Corn flour which is the typical ingredient for the raw material intended to obtain extruded, direct-expanded products, contains a large amount of starch and fewer nutrients, and the expanded products have a high caloric value that derives from the composition of corn flour.

The product, according to the invention, removes the previously mentioned disadvantages, by the incorporation of grape skins, resulting from the winemaking process, into the corn flour, facilitates the manufacturing of extruded, directly-expanded non-gluten products, which present improved nutritional characteristics and a reduced caloric value.

The technical problem that the invention resolves consist in creating a process for obtaining an extruded non-gluten product, directly expanded, with the role of a functional food, with a high fiber content and low energy value, which can be consumed by people with intolerance to gluten as well as those suffering from diabetes and obesity, but not only.

The process according to the invention, assumes that in order to obtain the finished product, the preparation of the raw materials is first carried out by sifting the corn flour obtained from grinding yellow degerminated corn to a grain size of less than 1,0 mm. A a grain size of less than 0.2 mm flour from grape skins was obtained by grinding the dry skins separated from Feteasc 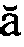 Regal 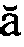 grape pomace, respectively from Merlot grape pomace. Flour mixes were obtained for extrusion by mixing 70 parts corn flour with 30 parts flour from grape skins from the Feteasc 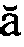 Regal 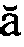 variety, and respectively 80 parts corn flour with 20 parts grape skins from the Merlot variety, which are homogenized in a mixer for 4 min. The moisture content of the homogenized mixture is determined and tne required amount of water is added so that the final humidity is 15%...17%, then the mixes prepared are introduced into a single-screw extruder with a working chamber diameter of 19 mm and a length:diameter ratio of 25:1. The extruder is equipped with a 2 mm diameter nozzle to form the extruded, direct-expanded product. The extruder has four zones with different processing temperatures and the screw works with a compression ratio of 3:1. The working parameters, the temperatures of 50 °C, 95 °C, 175 °C and 180 °C in the four zones, the screw speed of 150 revolutions per minute and the extruder feed speed of 24 revolutions per minute, are set progressively, in steps, until reaching the working values, which lead to obtaining the extruded, direct-expanded product. The directly expanded product is cut to the desired length, dried at room temperature (22...24 °C) for 14...16 h and packed in polyethylene bags.

The invention also refers to an extruded, direct-expanded non-gluten product with high fiber content and low caloric value, obtained by the process defined above, which consists of 17,08% fibers, 64,46% carbohydrates, 8,78 % protein, 1,48% lipid, 1,63% ash and 6,57% moisture, and has an energy value of 314.05 kcal/100g when the source of fiber is the grape skin from Feteasc 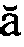 Regal 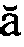 grape pomace, or it consists of 10.,67% fiber, 68,69% carbohydrates, 9,58% protein, 1,70% lipids, 1,34% ash and 8,02% moisture, and has an energy value of 336,72 kcal/100g when the fiber source is grape skin from Merlot grape pomace.

The product, according to the invention, has a high content of fibers, compounds deficient in corn flour, due to the addition of flour from grape skins from the Feteasc 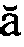 Regal 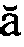 variety, respectively from the Merlot variety with a granular size of less than 0,2 mm in the composition of the mix for extrusion, as well as low caloric value. Mixtures consisting of maize flour with a sieve size of less than 1.0 mm and grape skin flour with a sieve size of less than 0,2 mm, which include 70 parts of maize flour and 30 parts of grape skin flour from the Feteasc 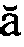 Regal 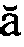 variety, respectively from 80 parts corn flour and 20 parts flour from grape skins from the Merlot variety, has an improved content in fibers, proteins, lipids, mineral substances, antioxidant compounds, components deficient in corn flour. The fibers from grape skins of the Feteasc 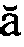 Regal 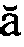 variety and the Merlot variety are of superior quality due to the optimal ratio of soluble and insoluble fibers. Granulation smaller than 0,2 mm allows the dispersion of the components of grape skins in the corn flour and facilitates the association between the components of wheat flour and those of the flour from grape skins, the formation of complexes between phenolic compounds and polysaccharides, with implications on the functional-technological characteristics of the mix for extrusion and implicitly on the final product. Grape pomace skins include insoluble fibers, cellulose and hemicellulose, but also soluble fibers such as pectin (Bender et al., 2017), components that influence starch gelatinization during the extrusion process, depending on the addition dose and particle size. The soluble and insoluble fibers present in the composition of the extrusion mix influence the porosity of the directly-expanded product due to their differentiated action. If insoluble fibers cause air cell rupture, which may be due to reduced chemical compatibility between the insoluble fiber fractions and the continuous starch matrix, soluble fibers, such as pectin, reduce melt viscosity, support the formation and growth of gas cells, and cause a faster evaporation of water at the exit from the mold due to increased diffusion of water vapor.

The mixes formulated for extrusion according to the invention ensure the production of extruded non-gluten products, directly expanded with a superior nutritional value for the human body, increase the nutritional quality and increase the shelf life of the product due to the association of fibers from the grape skins with the antioxidant compounds. In addition, these mixes led to the production of products with sensory characteristics accepted by consumers, giving a score higher than 7 for general acceptability in the sensory evaluation on the scoring scale from 1 to 9.

The application of the invention leads to obtaining the following advantages:
- obtaining extruded, directly-expanded, non-gluten snack-type products that can be consumed by people suffering from celiac disease;
- obtaining extruded, directly-expanded non-gluten snack-type products, rich in fiber that fight constipation, reduce the risk of obesity and colon cancer etc.;
- the production of extruded non-gluten, directly-expanded snack-type products with a functional role due to the fibers and antioxidants from the grape skins;
- the unique natural phenolic compounds and oligosaccharides in the composition of grape skins act as prebiotics, while promoting the growth of beneficial intestinal bacteria;
- the low content of digestible carbohydrates, intervening with positive effects in the physiology of the body by reducing the increase in the concentration of glucose in blood;
- the product obtained has in its composition components that are easy to buy.

The manufacturing of the product, according-to the invention, provides for the following stages: preparation of raw materials, preparation of the mix for extrusion, processing by extrusion-cooking of the mix and obtaining the expanded product, cutting to the desired size of the direct-expanded product, drying and packaging.

Corn flour is obtained by grinding degerminated yellow corn, followed by sieving, to a sieve size of less than 1.0 mm. To obtain the flour from grape skins, the grape skins are separated from the pomace resulting from the vinification process of Feteasc 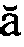 Regal 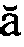 grapes, respectively Merlot grapes, they are dried, then they are ground and sieved, to a sieve grain size of less than 0,2 mm.

Next, two examples of the invention are given.

### Example 1

To obtain the mix intended for extrusion, 30 parts of flour from grape skins of the Feteasc 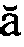 Regal 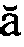 variety are mixed with 70 parts corn flour and put in a mixer where they are mixed for 4 minutes to homogenize the composition. After homogenization,the humidity of the mix is determined and the amount of water necessary to obtain the final humidity of 15...17% is added. The mix thus prepared is introduced into a single-screw extruder, with a working chamber diameter of 19 mm and a length:diameter ratio of 25:1. The extruder is equipped with a nozzle with a diameter of 2 mm, to form the extruded, direct-expanded product. The extruder has four zones with different processing temperatures and the screw works with a compression ratio of 3:1. The working parameters, the temperatures of 50°C, 95°C, 175°C and 180°C in the four zones, the screw speed of 150 revolutions per minute and the extruder feed speed of 24 revolutions per minute, are set progressively, in steps, until reaching the working values, which lead to obtaining the extruded, direct-expanded product. The directly expanded product is cut to the desired length, dried at room temperature (22...24 °C) for 14...16 h and packed in polyethylene bags.

### Example 2

The working method is similar to that of the example 1, the differences being represented by the ingredients in the composition of the mix intended for extrusion. To obtain the mix, mix 20 parts flour from Merlot grape skins with 80 parts corn flour and put them in a mixer where they are mixed for 4 min to homogenize the composition. After homogenization, the humidity of the mix is determined and the amount of water necessary to obtain the final humidity of 15...17% is added and the mix thus prepared is introduced into the extruder for the manufacture of the extruded, direct-spread product.

The product, according to the invention, by its composition is a functional non-gluten food, with a fiber-rich content of 17,08% fiber and, respectively, 10,67% fiber provided by the skins of grapes from the Feteasc 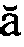 Regal 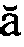 variety, respectively from the Merlot variety, with a granular size of less than 0,2 mm. The product also contains 64,46% carbohydrates, 8,78% proteins, 1,48% lipids, 1,63% ash and 6,57% moisture, and has an energy value of 314,05 kcal/100g when the source of fiber is grape skin from Feteasc 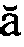 Regal 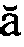 grape pomace, or contains 68,69% carbohydrates, 9,58% proteins, 1,70% lipids, 1,34% ash and 8,02% moisture, and has an energy value of 336,72 kcal/100g when the source of fiber is grape skin from Merlot grape pomace.

The process of obtaining an extruded non-gluten product, directly expanded, according to the invention, can be reproduced with the same characteristics and performances whenever necessary.

## Claims

1. Process for obtaining an extruded, direct-expanded, non-gluten snack-type product with a rich fiber and antioxidant content, **characterized by** the fact that, its production consists in the preparation of extrusion mixes from 30 parts of Feteasc 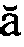 Regal 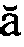 grape pomace skins, respectively 20 parts of grape skins from Merlot grape pomace, ground and sieved to a granular size of less than 0.2 mm and 70 parts, respectively 80 parts corn flour, with a granularity of less than 1.0 mm, to which water is added until the moisture content of the mixture is 15 ... 17%, which are introduced into a single-screw extruder with a compression ratio of 3:1 and four zones that have different working temperatures, which is equipped with a 2 mm nozzle in order to obtain the direct-expanded product. The working parameters, the temperatures of 50 °C, 95 °C, 175 °C and 180 °C in the four zones, the screw speed of 150 revolutions per minute and the extruder feed speed of 24 revolutions per minute, are set progressively, in steps, until reaching the working values, which lead to obtaining the extruded, direct-expanded product. The directly expanded product is cut to the desired length, dried at room temperature (22...24 °C) for 14...16 h and packed.

2. Extruded non-gluten, direct-expanded, snack-type product with high fiber content and low caloric value, obtained by the process defined in claim 1, **characterized by** the fact that, it consists of 17,08% fiber and, respectively, 10,67% fiber provided by the skins of grapes 'from the Feteasc 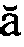 Regal 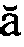 variety, respectively from the Merlot variety, with a granular size of less than 0,2 mm; the grape skin product from Feteasc 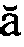 Regal 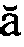 grape pomace also contains 64,46% carbohydrates, 8,78% proteins, 1,48% lipids, 1,63% ash and 6,57% moisture, and has the energy value of 314,05 kcal/100g and the product with grape skin from Merlot grape pomace contains 68,69% carbohydrates, 9,58% proteins, 1,70% lipids, 1,34% ash and 8,02% moisture, and it has the energy value of 336,72 kcal/100g.
